# EUROPÄISCHE PATENTSCHRIFT

(11) **EP 1 807 763 B1**
(45) Veröffentlichungstag und Bekanntmachung des Hinweises auf die Patenterteilung: **24.09.2008**
(21) Anmeldenummer: 05801543.9
(22) Anmeldetag: 25.10.2005
(51) Int. Cl.: G06F 11/16

(54) **VERFAHREN UND VORRICHTUNG ZUR ÜBERWACHUNG EINER SPEICHEREINHEIT IN EINEM MEHRPROZESSORSYSTEM**
METHOD AND DEVICE FOR MONITORING A MEMORY UNIT IN A MULTI-PROCESSOR SYSTEM
PROCEDE ET DISPOSITIF POUR SURVEILLER UNE UNITE DE MEMOIRE DANS UN SYSTEME MULTIPROCESSEUR

(30) Priorität: 25.10.2004 DE 102004051952; 25.10.2004 DE 102004051964; 25.10.2004 DE 102004051950; 25.10.2004 DE 102004051937; 25.10.2004 DE 102004051992
(43) Veröffentlichungstag der Anmeldung: 18.07.2007
(73) Patentinhaber: ROBERT BOSCH GMBH, 70442 Stuttgart (DE)
(72) Erfinder: KOTTKE, Thomas, 71139 Ehningen (DE); TRITTLER, Stefan, 70839 Gerlingen (DE)
(86) Internationale Anmeldenummer: PCT/EP2005/055538
(87) Internationale Veröffentlichungsnummer: WO 2006/045801

(56) Entgegenhaltungen:
- EP-A- 0 863 464
- US-A- 5 809 522
- US-A1- 2002 073 357
- US-B1- 6 615 366

## Beschreibung

### Stand der Technik

In technischen Anwendungen, wie insbesondere im Kraftfahrzeug oder im Industriegüterbereich also z.B. Maschinenbereich und in der Automatisierung werden ständig mehr und mehr mikroprozessor- oder rechnerbasierte Steuerungs- und Regelungssysteme für sicherheitskritische Anwendungen eingesetzt. Dabei sind Zweirechnersysteme oder Zweiprozessorsysteme (Dual Cores) heutzutage gängige Rechnersysteme für sicherheitskritische Anwendungen, insbesondere im Fahrzeug wie beispielsweise für Antiblockiersysteme, das Elektronische Stabilitätsprogramm (ESP), X-by-Wire-Systeme wie Drive-by-Wire oder Steer-by-Wire sowie Break-by-Wire, usw. oder auch bei sonstigen vernetzten Systemen. Um diese hohen Sicherheitsansprüche in zukünftigen Anwendungen zu befriedigen, sind mächtige Fehlermechanismen und Fehlerbehandlungsmechanismen erforderlich, insbesondere um transienten Fehler, die beispielsweise bei Verkleinerung der Halbleiterstrukturen der Rechnersysteme entstehen, zu begegnen. Dabei ist es relativ schwierig den Core selbst, also den Prozessor zu schützen. Eine Lösung hierfür ist wie erwähnt die Verwendung eines Zweirechnersystems oder Dual Core-Systems zur Fehlerdetektion.

Aus der US 5,809,522 ist bereits ein System zur Verwaltung eines Cache-Speichers bekannt. Aus der US6,615,366 ist bereits ein Rechnersystem mit zwei Ausführungseinheiten bekannt.

Solche Prozessoreinheiten mit wenigstens zwei integrierten Ausführungseinheiten sind somit als Dual-Core- oder Multi-Core-Architekturen bekannt. Solche Dual-Core- oder Multi-Core-Architekturen werden nach heutigem Stand der Technik hauptsächlich aus zwei Gründen vorgeschlagen:

Zum Einen kann damit eine Leistungssteigerung, also eine Performance-Steigerung erreicht werden, indem die beiden Ausführungseinheiten oder Cores als zwei Recheneinheiten auf einem Halbleiterbaustein betrachtet und behandelt werden. In dieser Konfiguration bearbeiten die zwei Ausführungseinheiten oder Cores unterschiedliche Programme respektive Tasks. Dadurch lässt sich eine Leistungssteigerung erzielen, weshalb diese Konfiguration als Leistungsmodus oder Performance-Mode bezeichnet wird.

Der zweite Grund, eine Dual-Core- oder Multi-Core-Architektur zu realisieren, ist eine Sicherheitssteigerung, indem die beiden Ausführungseinheiten redundant das gleiche Programm abarbeiten. Die Ergebnisse der beiden Ausführungseinheiten oder CPUs, also Cores werden verglichen und ein Fehler kann bei dem Vergleich auf Übereinstimmung erkannt werden. Im Folgenden wird diese Konfiguration als Sicherheitsmodus oder Safety-Mode oder auch Fehlererkennungsmodus bezeichnet.

Heutzutage gibt es somit einerseits Zwei- oder Mehrprozessorsysteme die zur Erkennung von Hardware-Fehlern redundant arbeiten (siehe Dual-Core oder Master-Checker-Systeme) und anderseits Zwei- oder Mehrprozessorsysteme, die auf ihren Prozessoren unterschiedliche Daten abarbeiten. Kombiniert man nun diese beiden Betriebsarten in einem Zwei- oder Mehrprozessorsystem (der Einfachheit halber wird nun nur noch von einem Zweiprozessorsystem gesprochen, die nachfolgende Erfindung ist aber genauso auf Mehrprozessorsystemen anwendbar), so müssen die beiden Prozessoren im PerformanceModus unterschiedliche Daten erhalten und im Fehlererkennungsmodus die gleichen Daten.

Die Taktfrequenz heutiger Prozessoren liegt typischerweise deutlich höher als die Frequenz, mit der auf einen insbesondere externen Speicher zugegriffen werden kann. Um diese Zeitdifferenz auszugleichen, werden Cachespeicher eingesetzt. Durch Zusammenarbeit eines solchen schnellen Pufferspeichers mit einem entsprechenden Hauptspeicher können dann die Zugriffszeiten deutlich reduziert werden.

Bei den Implementierungen von insbesondere Zweiprozessorsystemen (Dual-Core) wird für jeden Prozessor ein Cache vorgesehen. Caches dienen dabei im System als schneller Zwischenspeicher, damit der Prozessor die Daten nicht immer aus dem langsamen Hauptspeicher holen muss. Um dies zu ermöglichen, muss bei der Implementierung von Cache stark auf dessen Zugriffsdauer geachtet werden. Diese setzt sich aus der eigentlichen Zugriffszeit um die Daten aus dem Cache zu holen und aus der Zeit um die Daten an den Prozessor weiterzureichen zusammen.

In einem Mehrprozessorsystem, insbesondere einem Zweirechnersystem mit 2 Prozessoren, arbeiten mehrere Prozessoren dieselben oder verschiedene Aufgaben ab. Wenn sie verschiedene Aufgabe abarbeiten ist meistens zwischen dem Prozessor und dem Hauptspeicher jeweils ein Cache pro Prozessor dazwischengekoppelt. Dieser ist zur Entkopplung der unterschiedlichen Arbeitsgeschwindigkeit des Hauptspeichers und des Prozessors notwendig: Arbeitet nun das Zweirechnersystem im Modus in dem die beiden Prozessoren unterschiedliche Aufgaben abarbeiten, so werden die Caches der Prozessoren mit unterschiedlichen Daten geladen. Wird nun in den Sicherheitsmodus umgeschaltet, in dem die Prozessoren die gleichen Aufgaben abarbeiten und die Ausgangsdaten verglichen werden, muss vor einem Umschalten der Cacheinhalt gelöscht, bzw. als ungültig gekennzeichnet werden

Die Aufgabe der Erfindung ist nun ein Verfahren und eine Vorrichtung bzw. eine Implementierung darzustellen, um dieses leistungsbremsende Manko zu verhindern, um nicht bei jedem Umschalten des Modus vom Performance in den Sicherheitsmodus den Cache vollständig löschen oder für ungültig erklären zu müssen.

Solch eine Implementierung ist bis jetzt noch nicht bekannt. Sie ermöglicht den effektiven Betrieb eines Zweiprozessorsystems, so dass in den beiden Modi Sicherheit und Performance im Betrieb ohne Leistungseinbußen umgeschaltet werden kann. Dabei wird im weiteren von Prozessoren gesprochen, was aber ebenso Cores bzw. Recheneinheiten begrifflich einschließt.

Beschreibung der Ausführungsbeispiele und Vorteile der Erfindung

Die Erfindung offenbart zur Lösung dieser Aufgabe ein Verfahren gemäß Patentanspruch 1 und eine Vorrichtung gemäß Patentanspruch 14 zur Überwachung einer Speichereinheit in einem System mit wenigstens zwei Recheneinheiten, wobei Umschaltmittel enthalten sind durch welche zwischen wenigstens zwei Betriebsmodi des Systems umgeschalten werden kann, wobei die Vorrichtung derart ausgestaltet ist, dass eine Mitprotokollierung des Speicherinhalts und/oder des Betriebsmodus in welchem der Speicherinhalt erstellt wurde erfolgt. Ebenso wird erfindungsgemäß ein entsprechendes System und eine entsprechende Speichereinheit, insbesondere ein Cachespeicher offenbart.

Durch eine Mitprotokollierung was wann in den Cache geschrieben wurde, müssen nicht die kompletten Daten bei einem Moduswechsel als ungültig gekennzeichnet werden. Der Cache muss folglich nicht so oft nachgeladen werden und die Performance des Gesamtsystems erhöht sich entsprechend.

Weiterhin ist eine Einheit zur Datenverteilung aus wenigstens einer Datenquelle in einem System mit wenigstens zwei Recheneinheiten aus, wobei Umschaltmittel (ModeSwitch) enthalten sind durch welche zwischen wenigstens zwei Betriebsmodi des Systems umgeschalten werden kann, wobei die Einheit derart ausgestaltet ist, dass die Datenverteilung und/oder die Datenquelle (insbesondere Instr.Speicher, Datenspeicher, Cache)abhängig von dem Betriebsmodus ist. Gleichermaßen ist ein System mit einer solchen Einheit gezeigt.

Dabei entspricht der erste Betriebsmodus einem Sicherheitsmodus, bei dem die zwei Recheneinheiten gleiche Programme und/oder Daten abarbeiten und Vergleichsmittel vorgesehen sind, welche die bei der Abarbeitung der gleichen Programme entstehenden Zustände auf Übereinstimmung vergleichen

Die erfindungsgemäße Einheit bzw. das erfindungsgemäße Verfahren ermöglicht die Implementierung der beiden Modi in einem Zweiprozessorsystem ohne Leistungseinbußen bei der Cacheverwendung.

Arbeiten die beiden Prozessoren im Fehlererkennungsmodus (F-Modus), so erhalten die beiden Prozessoren die gleichen Daten/Instruktionen und arbeiten sie im Performancemodus (P-Modus), so kann jeder Prozessor auf den Speicher zugreifen. Dann verwaltet diese Einheit die Zugriffe auf den nur einfach vorhandenen Speicher oder Peripherie.

Im F-Modus übernimmt die Einheit die Daten/Adressen eines Prozessors (hier Master genannt) und leitet diese an die Komponenten wie Speicher, Bus, usw. weiter. Der zweite Prozessor (hier Slave) möchte den gleichen Zugriff machen. Die Datenverteilungseinheit nimmt dies an einem zweiten Port entgegen, aber leitet die Anfrage nicht an die weiteren Komponenten weiter. Die Datenverteilungseinheit übergibt dem Slave die gleichen Daten wie dem Master und vergleicht die Daten der beiden Prozessoren. Sind diese unterschiedlich, so zeigt dies die Datenverteilungseinheit (hier DVE) durch ein Fehlersignal an. Es arbeitet somit nur der Master auf den Bus/Speicher und der Slave bekommt die selben Daten (Funktionsweise wie bei einem Dual-Core System).

Im P-Modus arbeiten die beiden Prozessoren unterschiedliche Programmteile ab. Die Speicherzugriffe sind somit auch unterschiedlich. Die DVE nimmt somit die Anforderung der Prozessoren entgegen und gibt die Ergebnisse/angeforderte Daten an den Prozessor zurück, der sie angefordert hat. Möchten nun beide Prozessoren gleichzeitig auf eine Komponenten zugreifen, so wird ein Prozessor in einen Wartezustand versetzt, bis der andere bedient wurde.

Die Umschaltung zwischen den beiden Modi und somit der unterschiedlichen Arbeitsweise der Datenverteilungseinheit erfolgt durch ein Steuersignal. Dies kann entweder von einem der beiden Prozessoren generiert werden oder extern.

Erfindungsgemäß wird somit bei den Betriebsmodi zwischen einem Performanzmodus und einem Sicherheitsmodus unterschieden und bei der Mitprotokollierung vermerkt welcher Speicherinhalt im Performanzmodus erstellt wurde. Zweckmäßiger Weise wird ebenso oder statt dessen bei der Mitprotokollierung vermerkt welcher Speicherinhalt im Sicherheitsmodus erstellt wurde. Dabei kann zur Mitprotokollierung eine Tabelle erstellt werden und die Tabelle abhängig von einem Modussignal welches den Betriebsmodus wenigstens einer Recheneinheit beschreibt ausgewertet werden.

Vorteilhafter Weise werden bei dem Speicherinhalt Daten von anderem Speicherinhalt, insbesondere Instruktionen, unterschieden und zusätzlich in der Tabelle mitprotokolliert, ob die Daten im Performanzmodus und/oder im Sicherheitsmodus in der Speichereinheit verändert wurden.

Sehr vorteilhaft ist, dass bei der Mitprotokollierung zusätzlich festgehalten wird ob der jeweilige Speicherinhalt gültig ist. Bei einem Start der Recheneinheiten können somit alle Speicherinhalte, insbesondere alle Daten, ungültig gemacht werden.

Zweckmäßiger Weise ist je Recheneinheit eine Speichereinheit vorgesehen und die Mitprotokollierung erfolgt je Speichereinheit, wobei zusätzlich ein Vergleich der Mitprotokollierung je Speichereinheit erfolgt Insbesondere wird für beide Recheneinheiten nur eine Tabelle im Rahmen der Mitprotokollierung erstellt oder es wird für jede Recheneinheit eine Tabelle im Rahmen der Mitprotokollierung erstellt wird, wobei dann die Tabelleneinträge zwischen den Tabellen austauschbar sind.

Vorteilhaft ist, dass Tabelleneinträge auf Übereinstimmung verglichen werden. Ebenso vorteilhaft ist, dass die Gültigkeitsinformation im Sicherheitsmodus ausgewertet wird.

Wird das Zweiprozessorsystem im F-Modus mit einem Taktversatz betrieben und im P-Modus nicht, so verzögert die DVE-Einheit die Daten für den Slave entsprechend, bzw. speichert die Ausgangsdaten des Master solange, bis sie mit den Ausgangsdaten des Slave zur Fehlererkennung verglichen werden können.

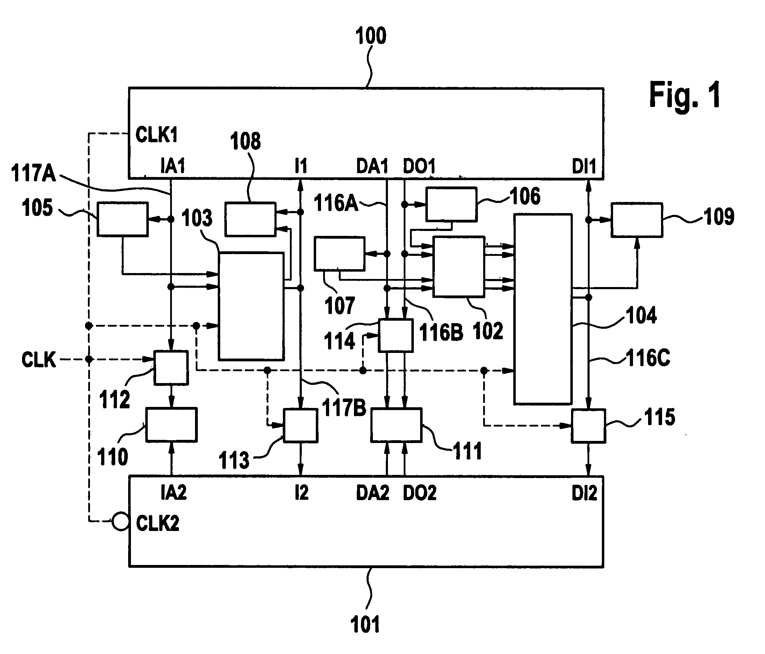

### Der Taktversatz wird anhand der Figur 1 näher erläutert:

Figur 1 zeigt ein Zweirechnersystem mit einem ersten Rechner 100, insbesondere einem Masterrechner und einem zweiten Rechner 101, insbesondere einem Slave-Rechner. Das gesamte System wird dabei mit einem vorgebbaren Takt bzw. in vorgebbaren Taktzyklen (clock cycle) CLK betrieben. Über den Takteingang CLK1 des Rechners 100 sowie über den Takteingang CLK2 des Rechners 101 wird diesem der Takt zugeführt. Bei diesem Zweirechnersystem ist darüber hinaus beispielhaft ein spezielles Merkmal zur Fehlererkennung enthalten, in dem nämlich der erste Rechner 100 sowie der zweite Rechner 101 mit einem Zeitversatz, insbesondere einem vorgebbaren Zeitversatz bzw. einem vorgebbaren Taktversatz arbeiten. Dabei ist jede beliebige Zeit für einen Zeitversatz vorgebbar und auch jeder beliebige Takt bezüglich eines Versatzes der Taktzyklen. Dies kann ein ganzzahliger Versatz des Taktzyklus (clock cycle) sein, aber eben auch wie in diesem Beispiel dargestellt, beispielsweise ein Versatz von 1,5 Taktzyklen, wobei hier der erste Rechner 100 eben 1,5 Taktzyklen vor dem zweiten Rechner 101 arbeitet respektive betrieben wird. Durch diesen Versatz kann vermieden werden, dass Gleichtaktfehler, sogenannte common mode failures, die Rechner oder Prozessoren, also die Cores des Dual Cores Systems, gleichartig stören und damit unerkannt bleiben. D.h. solche Gleichtaktfehler betreffen durch den Versatz die Rechner zu unterschiedlichen Zeitpunkten im Programmablauf und bewirken demnach unterschiedliche Effekte bezüglich der beiden Rechner wodurch Fehler erkennbar werden. Gleichartige Fehlerwirkungen ohne Taktversatz wären u.U. in einem Vergleich nicht erkennbar, dies wird dadurch vermieden. Um diesen Versatz bezüglich der Zeit oder des Taktes, hier insbesondere 1,5 Taktzyklen im Zweirechnersystem zum implementieren sind die Versatzbausteine 112 bis 115 implementiert.

Um die genannten Gleichtaktfehler zu erkennen ist dieses System eben beispielsweise dazu ausgelegt in einem vorgegebenen Zeitversatz oder Taktzyklenversatz zu arbeiten, insbesondere hier 1,5 Taktzyklen, d.h. während der eine Rechner, z. B. Rechner 100 direkt die Komponenten, insbesondere die externen Komponenten 103 und 104 anspricht, arbeitet der zweite Rechner 101 mit einer Verzögerung von genau 1,5 Taktzyklen dazu. Um in diesem Fall die gewünschte Eineinhalbzyklusverzögerung, also von 1,5 Taktzyklen zu erzeugen wird Rechner 101 mit der invertierten Clock, also dem invertierten Takt am Takteingang CLK2 gespeist. Dadurch müssen aber auch die vorgenannten Anschlüsse des Rechners also seine Daten bzw. Befehle über die Busse um die genannten Taktzyklen, also hier insbesondere 1,5 Taktzyklen verzögert werden, wozu eben wie gesagt die Versatz- oder Verzögerungsbausteine 112 bis 115 vorgesehen sind. Neben den beiden Rechnern oder Prozessoren 100 und 101 sind Komponenten 103 und 104 vorgesehen, die über Busse 116, bestehend aus den Busleitungen 116A und 116B und 116C sowie 117, bestehend aus den Busleitungen 117A und 117B mit den beiden Rechnern 100 und 101 in Verbindung stehen. 117 ist dabei ein Befehlsbus, bei welchem mit 117A ein Befehlsadressbus und mit 117B der Teil-Befehls(daten)bus bezeichnet ist. Der Adressbus 117A ist über einen Befehlsadressanschluss IA1 (Instruction Adress 1) mit Rechner 100 und über einen Befehlsadressanschluss IA2 (Instruction Adress 2) mit Rechner 101 verbunden. Die Befehle selbst werden über den Teil-Befehlsbus 117B übertragen, der über einen Befehlsanschluss I1 (Instruction 1) mit Rechner 100 und über einen Befehlsanschluss I2 (Instruction 2) mit Rechner 101 verbunden ist. In diesem Befehlsbus 117 bestehend aus 117A und 117B ist eine Komponente 103 z. B. ein Befehlsspeicher, insbesondere ein sicherer Befehlsspeicher oder dergleichen zwischengeschaltet. Auch diese Komponente, insbesondere als Befehlsspeicher wird in diesem Beispiel mit dem Takt CLK betrieben. Daneben ist mit 116 ein Datenbus dargestellt, welcher einen Datenadressbus oder eine Datenadressleitung 116A und einen Datenbus oder eine Datenleitung 116B enthält. Dabei ist 116A, also die Datenadressleitung, über einen Datenadressanschluss DA1 (Data Adress 1) mit dem Rechner 100 und über einen Datenadressanschluss DA2 (Data Adress 2) mit Rechner 101 verbunden. Ebenso ist der Datenbus oder die Datenleitung 116B über einen Datenanschluss DO1 (Data Out 1) und einen Datenanschluss DO2 (Data Out 2) mit Rechner 100 bzw. Rechner 101 verbunden. Weiterhin zu Datenbus 116 gehört die Datenbusleitung 116C, welche über einen Datenanschluss DI1 (Data In 1) und einen Datenanschluss DI2 (Data In 2) jeweils mit Rechner 100 bzw. Rechner 101 verbunden ist. In diesem Datenbus 116 bestehend aus den Leitungen 116A, 116B und 116C ist eine Komponente 104 zwischengeschaltet, beispielsweise ein Datenspeicher, insbesondere ein sicherer Datenspeicher o. ä . Auch diese Komponente 104 wird in diesem Beispiel mit dem Takt CLK versorgt.

Dabei stehen die Komponenten 103 und 104 stellvertretend für beliebige Komponenten die über einen Datenbus und/oder Befehlsbus mit den Rechnern des Zweirechnersystems verbunden sind und entsprechend der Zugriffe über Daten und/oder Befehle des Zweirechnersystems bezüglich Schreiboperationen und/oder Leseoperationen fehlerhafte Daten und/oder Befehle erhalten oder abgeben können. Zur Fehlervermeidung sind zwar Fehlerkennungsgeneratoren 105, 106 und 107 vorgesehen welche eine Fehlerkennung erzeugen wie beispielsweise ein Parity-Bit oder auch einen anderen Fehlercode wie beispielsweise einen Error- Correction-Code, also ECC, o. ä.. Dazu vorgesehen sind dann auch die entsprechenden Fehlerkennungsprüfeinrichtungen oder Check-Einrichtungen 108 und 109 zur Überprüfung der jeweiligen Fehlerkennung also beispielsweise des Parity-Bit oder eines anderen Fehlercodes wie ECC.

Der Vergleich der Daten und/oder Befehle bezüglich der redundanten Ausführung im Zweirechnersystem erfolgt in den Vergleichern oder Komparatoren 110 und 111 wie in Figur 1 dargestellt. Existiert nun aber ein Zeitversatz, insbesondere ein Takt- oder Taktzyklusversatz zwischen den Rechnern 100 und 101, entweder hervorgerufen durch ein nichtsynchrones Zweiprozessorsystem oder bei einem synchronen Zweiprozessorsystem durch Fehler in der Synchronisierung oder auch wie in diesem speziellen Beispiel durch einen zur Fehlererkennung gewünschten Zeit- bzw. Taktzyklusversatz, insbesondere hier von 1,5 Taktzyklen, so kann in diesem Zeit- oder Taktversatz ein Rechner hier insbesondere Rechner 100 fehlerhafte Daten und/oder Befehle in Komponenten, insbesondere externe Komponenten wie z. B. hier insbesondere die Speicher 103 oder 104, aber auch bezüglich anderen Teilnehmern oder Aktuatoren oder Sensoren schreiben oder lesen. So kann er auch in fehlerhafter Weise einen Schreibzugriff anstatt eines vorgesehenen Lesezugriffs durch diesen Taktversatz durchführen. Diese Szenarien führen selbstverständlich zu Fehlern im gesamten System, insbesondere ohne klare Anzeigemöglichkeit welche Daten und/oder Befehle gerade fehlerhaft geändert wurden, wodurch auch die Recovery-Problematik entsteht.

Um diese Problematik zu lösen wird nun eine Verzögerungseinheit 102 wie dargestellt in die Leitungen des Datenbusses und/oder in den Befehlsbus geschaltet. Aus Gründen der Übersichtlichkeit ist nur die Einschaltung in den Datenbus dargestellt. Bezüglich des Befehlsbusses ist dies natürlich genauso möglich und denkbar. Diese Verzögerungseinheit 102 oder die Delay Unit verzögert die Zugriffe, hier insbesondere die Speicherzugriffe so, dass ein möglicher Zeit- oder Taktversatz kompensiert wird, insbesondere bei einer Fehlererkennung beispielsweise über die Komparatoren 110 und 111 z.B. mindestens solange, bis das Fehlersignal im Zweirechnersystem erzeugt ist, also die Fehlererkennung im Zweircchnersystem durchgeführt ist. Dabei können verschiedene Varianten implementiert sein:
Verzögerung der Schreib- und Leseoperationen, Verzögerung nur der Schreiboperationen oder auch, wenn auch nicht bevorzugt, eine Verzögerung der Leseoperationen. Dabei kann durch ein Änderungssignal, insbesondere das Fehlersignal, eine verzögerte Schreiboperation in eine Leseoperation gewandelt werden um fehlerhaftes Schreiben zu unterbinden.

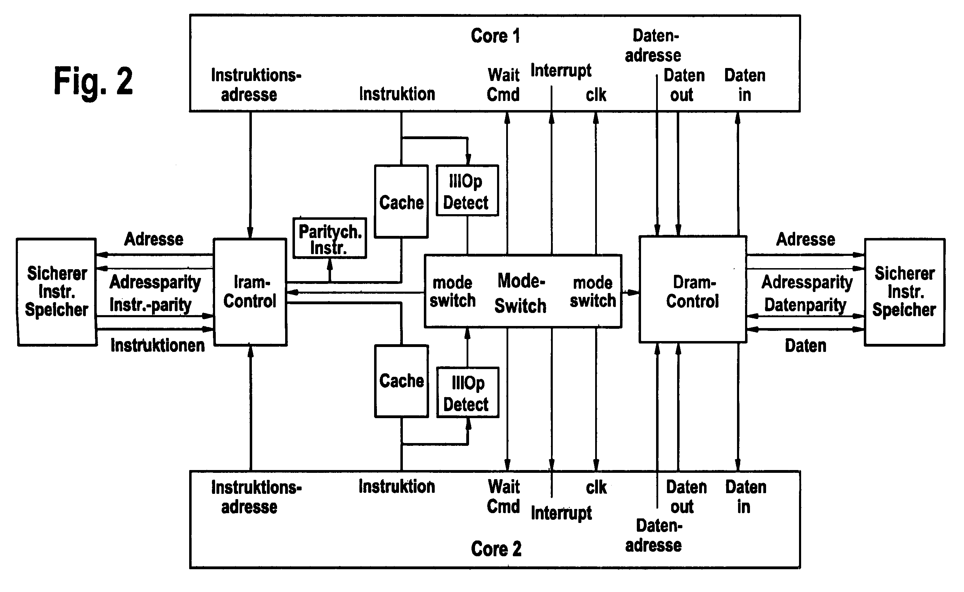

Nachfolgend anhand Figur 2 nun eine beispielhafte Implementierung bezüglich der Datenverteilungseinheit (DVE), die sich vorzugsweise aus einer Vorrichtung zur Detektierung des Umschaltwunsches (durch IIIOPDetect), der Modo-Switch-Einheit sowie dem Iram- und Dram-Control-Baustein zusammensetzt:

IllOpDetect: Die Umschaltung zwischen den beiden Modi wird durch die Einheiten "'Switch-Detect'" erkannt. Diese Einheit liegt zwischen dem Cache und dem Prozessor auf dem Instruktionsbus und schaut ob der Befehl IllOp in den Prozessor geladen wird. Wird der Befehl detektiert, so wird dieses Ereignis der Modeswitch Einheit mitgeteilt. Die "'Switch-Detect'" Einheit ist für jeden Prozessor einzeln vorhanden. Die Einheit "'Switch-Detect'" muss nicht fehlertolerant ausgeführt sein, da sie doppelt und somit redundant vorhanden ist. Andererseits ist es denkbar diese Einheit fehlertolerant und damit singulär auszuführen, bevorzugt ist aber die redundante Ausführung.

ModeSwitch: Die Umschaltung zwischen den beiden Modi wird durch die "'Switch-Detect'" Einheit getriggert. Soll eine Umschaltung vom Lock in den Split Modus erfolgen, detektieren beide "'Switch-Detect'" Einheiten die Umschaltung, da beide Prozessoren den gleichen Programmcode im Lock Modus abarbeiten. Die "'Switch-Detect'" Einheit des Prozessor 1 erkennt dies 1,5 Takte vor der "'Switch-Detect'" Einheit des Prozessors 2. Die "'Modeswitch'" Einheit hält mit Hilfe des Wait Signals den Prozessor 1 um 2 Takte an. Der Prozessor 2 wird 1,5 Takte später ebenfalls angehalten, aber nur um einen halben Takt, damit er zum Systemtakt synchronisiert wird. Anschließend wird das Status-Signal auf Split geschaltet für die weiteren Komponenten und die beiden Prozessoren arbeiten weiter. Damit die beiden Prozessoren nun unterschiedliche Tasks ausführen, müssen sie im Programmcode auseinanderlaufen. Dies erfolgt, indem direkt nach Umschalten in den Split-Modus ein Lesezugriff auf die Prozessor-ID erfolgt. Diese ausgelesene Prozessor-ID ist für jeden der beiden Prozessoren unterschiedlich. Wird nun auf eine Soll-Prozessor-ID verglichen, kann anschließend mit einem Conditional Jump Befehl der entsprechende Prozessor an eine andere Programmstelle gebracht werden. Bei einer Umschaltung vom Split-Modus in den Lock-Modus wird dies ein Prozessor bemerken, bzw. einer der beiden zuerst. Dieser Prozessor wird Programmcode ausführen, in dem der Umschaltbefehl enthalten ist. Dies wird nun durch die "'Switch-Detect'" Einheit registriert und teilt dies der Modeswitch Einheit mit. Diese hält den entsprechenden Prozessor an und teilt dem zweiten den Wunsch der Synchronisation durch einen Interrupt mit. Der zweite Prozessor erhält einen Interrupt und kann nun eine Softwareroutine zur Beendigung seines Tasks ausführen. Nun springt er ebenfalls an die Programmstelle, in der sich der Befehl zur Umschaltung befindet. Seine "'Switch-Detect'" Einheit signalisiert nun ebenfalls den Wunsch zum Moduswechsel an die Modeswitch Einheit. Zur nächsten steigenden Systemtaktflanke wird nun das Wait Signal für den Prozessor 1 deaktiviert und 1,5 Takte später für den Prozessor 2. Nun arbeiten beide wieder mit einem Taktversatz von 1,5 Takten synchron.

Befinden sich das System im Lock Modus, so müssen beide "'Switch-Detect'" Einheiten der Modeswitch Einheit mitteilen, dass sie in den Split Modus wollen. Erfolgt der Umschaltwunsch nur von einer Einheit, so wird der Fehler von den Vergleichseinheiten erkannt, da diese von einem der beiden Prozessoren weiterhin Daten geliefert bekommen und diese nicht mit dem angehaltenen Prozessoren übereinstimmen.

Sind die beiden Prozessoren im Split Modus und einer schaltet nicht zurück in den Lock-Modus, so kann dies durch einen externen Watchdog erkannt werden. Bei einem Triggersignal für jeden Prozessor bemerkt der Watchdog dass der wartende Prozessor sich nicht mehr meldet. Ist nur ein Watchdogsignal für das Prozessorsystem vorhanden, so darf die Triggerung des Watchdogs nur im Lock-Modus erfolgen. Somit würde der Watchdog erkennen, dass die Modusumschaltung nicht erfolgte. Das Modussignal liegt als Dual-Rail Signal vor. Dabei steht "'10'" für den Lock-Modus und "'01'" für den Split-Modus. Bei "'00'" und "'11'" sind Fehler aufgetreten.

IramControl: Der Zugriff auf den Befehlsspeicher der beiden Prozessoren wird über die IRAM Control gesteuert. Diese muss sicher ausgelegt sein, da sie ein Single Point of Failure ist. Sie besteht aus zwei Zustandsautomaten für jeden Prozessor: als je einen taktsynchronen iram1clkreset und einen asynchronen readiram1. Im sicherheitskritischen Modus überwachen sich die Zustandsautomaten der beiden Prozessoren gegenseitig und im Performancemodus arbeiten sie getrennt.

Das Nachladen der beiden Caches der Prozessoren werden durch 2 Zustandsautomaten gesteuert. Einem synchronen Zustandsautomaten iramclkreset und einem asynchronen readiram. Durch diese beiden Zustandsautoamten werden auch die Speicherzugriffe im Split-Modus verteilt. Hierbei hat Prozessor 1 die höhere Priorität. Nach einem Zugrif auf den Hauptspeicher durch Prozessor 1 bekommt nun - wenn beide Prozessoren wieder auf den Hauptspeicher zugreifen wollen -- Prozessor2 die Speicheizugriffserlaubnis zugeteilt. Diese beiden Zustandsautomaten sind für jeden Prozessor implementiert. Im Lock-Modus werden die Ausgangssignale der Automaten verglichen um auftretende Fehler erkennen zu können.

Die Daten zum Aktualisieren des Cache 2 im Lock-Modus werden in der IRAM-Control Einheit um 1,5 Takte verzögert.

In Bit 5 im Register 0 der SysControl wird codiert um welchen Core es sich handelt. Core 1 ist das Bit 0 und bei Core 2 ist es High. Dieses Register ist in den Speicherbereich mit der Adresse 65528 gespiegelt.

Bei einem Speicherzugriff von Core 2 wird erst überprüft in welchem Modus sich der Rechner befindet. Ist er im Lock-Modus so wird sein Speicherzugriff unterdrückt. Dieses Signal liegt als Common-Rail Signal vor, da es sicherheitskritisch ist.

Der Programmcounter des Prozessors 1 wird um 1,5 Takte verzögert um im Lock-Modus mit dem Programmcounter des Prozessors 2 verglichen werden zu können.

Im Split Modus können die Caches der beiden Prozessoren unterschiedlich nachgeladen werden. Wenn nun in den Lock-Modus umgeschaltet wird, sind die beiden Caches nicht kohärent zueinander. Dadurch können die beiden Prozessoren auseinanderlaufen und die Vergleicher signalisieren folglich einen Fehler. Um dies zu vermeiden, ist in der IRAM Control eine Flag Tabelle aufgebaut. In dieser wird vermerkt, ob eine Cachezeile im Lock- oder im Split-Modus geschrieben wurde. Im Lock-Modus wird der für die Cachezeile entsprechende Eintrag bei einer Cachezeilennachladung auf 0 gesetzt und im Split-Modus -- auch bei einer Cacheaktualisierung der Cachezeile von nur einem Cache - auf 1. Führt der Prozessor nun im Lock-Modus einen Speicherzugriff aus, so wird überprüft, ob diese Cachezeile im Lock-Modus aktualisiert wurde, d.h. in beiden Caches gleich ist. Im Split-Modus kann der Prozessor immer auf die Cachezeile zugreifen, unabhängig wie der Flag_Vector ist. Diese Tabelle muss nur einmal vorhanden sein, da bei einem Fehler die beiden Prozessoren auseinanderlaufen und somit an den Vergleichern dieser Fehler sicher erkannt wird. Da die Zugriffszeiten auf der zentralen Tabelle relativ hoch sind, kann diese Tabelle auch zu jedem Cache kopiert werden.

DramControl: In dieser Komponente werden für die Adress-, Daten- und Speichersteuersignale von jedem Prozessor das Parity gebildet.

Es gibt einen Prozess für beide Prozessor zum Sperren des Speichers. Dieser Prozess muss nicht sicher implementiert sein, da im Lock-Modus fehlerhafte Speicherzugriffe durch die Vergleicher erkannt werden und im Split-Modus keine sicherheitsrelevanten Anwendungen ausgeführt werden. Hierin wird überprüft, ob der Prozessor den Speicher für den anderen Prozessor sperren möchte. Dieses Sperren des Datenspeichers erfolgt durch einen Zugriff auf die Speicheradresse $FBFF$=64511. Dieses Signal soll genau ein Takt lang anliegen, auch wenn am Prozessor zum Zeitpunkt des Aufrufens ein waitcommand anliegt. Der Zustandsautomat zur Verwaltung der Datenspeicheizugriffe besteht aus 2 Hauptzuständen:
- Prozessorstatus Lock: Die beiden Prozessoren arbeiten im Lock-Modus. D.h. die Funktionalität des Datenspeicherlocking ist nicht notwendig. Prozessor 1 koordiniert die Speicherzugriffe.
- Prozessorstatus Split: Nun ist eine Zugriffskonfliktauflösung auf den Datenspeicher nötig und ein Speichersperren muss erfolgen können.
   Der Zustand im Split-Modus ist wiederum in 7 Zustände untergliedert, die die Zugriffskonflikte auflösen und den Datenspeicher für jeweils den anderen Prozessor sperren können. Bei gleichzeitigem Wunsch der beiden Prozessoren bei einem Zugriff, stellt die aufgeführte Reihenfolge gleichzeitig die Priorisierung dar.
- Core1\_Lock: Prozessor 1 hat den Datenspeicher gesperrt. Möchte in diesem Zustand Prozessor 2 auf den Speicher zugreifen, so wird er durch ein Wartesignal angehalten, bis Prozessor 1 den Datenspeicher wieder freigibt. \
- Core2\_Lock: Ist der gleiche Zustand wie der vorige nur dass nun Prozessor 2 den Datenspeicher gesperrt hat und Prozessor 1 bei Datenspeicheroperationen angehalten wird.
- lockl\_wait: Der Datenspeicher war durch den Prozessor 2 gesperrt als Prozessor 1 ihn ebenfalls für sich reservieren wollte. Prozessor 1 ist somit für die nächste Speichersperrung vorgemerkt.
- nex: Das gleiche für Prozessor 2. Der Datenspeicher war während des Sperrversuchs durch Prozessor 1 gesperrt. Prozessor 2 bekommt den Speicher vorreserviert. Bei normalen Speicherzugriff ohne Sperren kann hier Prozessor 2 vor Prozessor 1 zugreifen wenn davor Prozessor 1 dran war.
- Speicherzugriff von Prozessor 1: Der Speicher ist in diesem Fall nicht gesperrt. Prozessor 1 darf auf den Datenspeicher zugreifen. Falls er ihn sperren möchte, kann er dies in diesem Zustand vornehmen.
- Speicherzugriff durch Prozessor 2. Im selben Takt wollte Prozessor 1 nicht auf den Speicher zugreifen somit ist der Speicher frei für den Prozessor 2.
- kein Prozessor möchte auf den Datenspeicher zugreifen

Die DVE setzt sich wie erwähnt zusammen aus dem Detektierung des Umschaltwunsches (IllOPDetect) der ModeSwitch-Einheit und der Iram- und DramControl.

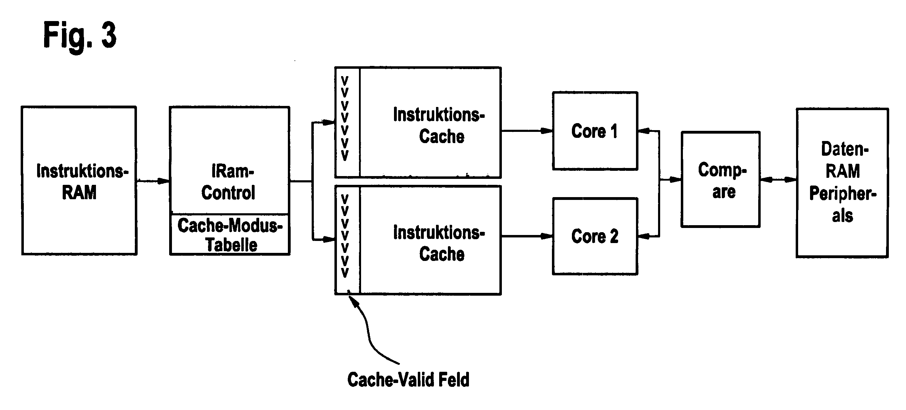

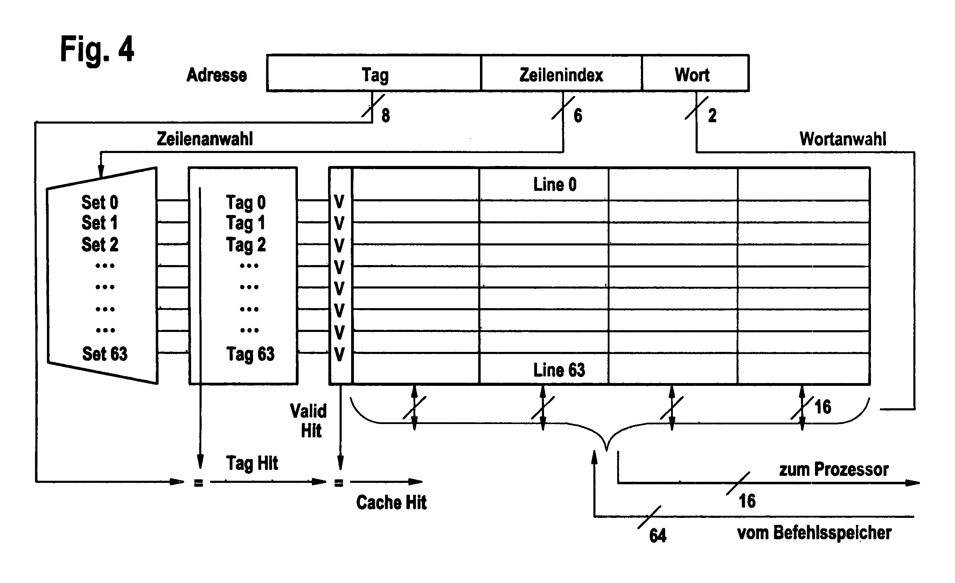

In Figur 3 ist noch einmal schematisch ein umschaltbares Zweiprozessorsystem mit den Caches dargestellt. In Figur 4 ist dazu ein Cachespeicher beispielhaft offenbart.
Es muss unterschieden werden zwischen Daten- und Befehlscache. Bei einem Befehlscache tritt bei einem nicht umschaltbaren Zweirechnersystem kein Koheränzproblem auf. Somit wird hier bis jetzt auch kein Snooping eingesetzt. Nun besteht hier der Ansatz ein Snooping der Befehle durchzuführen die in die jeweiligen Caches der Prozessoren geladen werden.

Es wird eine Tabelle aufgebaut:

| | | |
|---|---|---|
| Set 0 | Tag 0 | Valid |
| Set 1 | Tag 1 | not valid |
| Set 2 | Tag 2 | valid |
| ··· | ··· | ··· |
| ··· | ··· | ··· |
| ··· | ··· | ··· |
| ··· | ··· | ··· |
| Set 63 | Tag 63 | valid |

Darstellung der Cachesnooping Tabelle

In dieser ist für jede Cachezeile ein Eintrag vorgesehen. Diese Tabelle ist nur einmal für das umschaltbare Mehrprozessorsystem nötig. Werden die Daten im Lock-Modus geschrieben wird die entsprechende Zeile in dieser Tabelle als gültig gekennzeichnet. Wird in eine Cachezeile im Split-Modus geschrieben, so wird der entsprechende Eintrag für diese Zeile als ungültig gekennzeichnet.

Im Split-Modus wird bei jedem Cachezugriff nur überprüft ob dieser gültige Werte beinhaltet. Im Lock-Modus wird jedoch auch noch diese neue Tabelle abgefragt. Sind die Daten in dieser Tabelle als ungültig gekennzeichnet, so können zwar in den Caches gültige Daten sein, jedoch sind diese nicht dieselben in den Caches. Der Vergleicher des Zweiprozessorsystems würde folglich im Lock-Modus einen Fehler anzeigen, da die beiden Prozessoren auseinanderlaufen würden.

Wird diese Tabelle auch für den Datenspeicher verwendet, muss noch überprüft werden, ob, wenn die Daten im Lock-Modus geladen wurden, diese Cachezeile nicht nur im Split Modus ersetzt wurde, sondern ob auch die Daten durch einen Prozessor in einem der Caches aktualisiert wurden.

### Befehlscache:

| **Aktion** | **Cache-Valid Feld** | **Neue übergeordnete Tabelle** | **Aktion** |
|---|---|---|---|
| Start des Systems | Alle Daten ungültig | Alle Daten ungültig | |
| Cachezeile wird im Lock-Modus geladen | Cachezeile gültig | Cachezeile gültig | |
| Cachezeile wird im Split-Modus geladen | Cachezeile gültig | Cachezeile ungültig | Bei Zugriff auf die Cachezeile im Lock-Modus muss diese bei allen Caches der Prozessoren nachgeladen werden auch wenn sie schon in einem Cache als gültig gekennzeichnet ist |

Wird eine Cachezeile durch eine andere ersetzt im Split-Modus bei einem Prozessor, so muss nur das Valid-Feld als ungültig in der Tabelle ersetzt werden. Es ist nicht nötig auf das Tag Feld zu achten.

Eine zweite Variante der Tabelle kann wie folgt aussehen:

| | Cache 1 | Cache 2 | Vergleich |
|---|---|---|---|
| Set 0 | Tag 0 | Tag 0 | gleich |
| Set 1 | Tag 1 | Tag 1 | nicht gleich |
| Set 2 | Tag 2 | Tag 2 | gleich |
| ··· | ··· | ··· | ··· |
| ··· | ··· | ··· | ··· |
| ··· | ··· | ··· | ··· |
| ··· | ··· | ··· | ··· |
| Set 63 | Tag 63 | Tag 63 | gleich |

Cachesnoopingtabelle nach Variante 2

Diese zweite Variante der Tabelle ist, dass sie nur aus dem Set- und dem Tag-Feld besteht, aber dafür für jeden Cache getrennt. Dabei wird die Tabelle zwar größer, der Vorteil besteht jedoch darin, dass im Split-Modus für beide Caches zentral dokumentiert wird, wie deren Inhalt aussieht. Dann kann im Lock-Modus durch einen Vergleich der Tabellen bestimmt werden, ob diese Daten bei beiden Caches gleich sind. Es können somit Cachezeilen zu unterschiedlichen Zeitpunkten aktualisiert werden, ohne dass sie wie bei der ersten Methode als ungültig für den Lock-Modus gekennzeichnet werden.

Der Kern der Erfindung ist wie oben ausgeführt die Mitprotokollierung der Daten im Cache. Daneben löst aber auch die dargestellte spezielle Implementierung die Eingangs genannte Aufgabe.

## Patentansprüche

1. Verfahren zur Überwachung eines Systems mit wenigstens zwei Recheneinheiten mit jeweils einem Cache-Speicher, wobei Umschaltmittel enthalten sind durch welche zwischen wenigstens einem Performanzmodus, in dem die beiden Recheneinheiten unterschiedliche Programme respektive Tasks abarbeiten und einem Sicherheitsmodus, in dem die beiden Recheneinheiten redundant das gleiche Programm respektive Task abarbeiten, des Systems umgeschaltet werden kann, **dadurch gekennzeichnet daß** eine Mitprotokollierung eines Speicherinhalts der jeweiligen Cache-Speicher erfolgt womit vermerkt wird welcher Speicherinhalt in welchem Betriebsmodus erstellt wurde.

2. Verfahren nach Anspruch 1, **dadurch gekennzeichnet, dass** bei der Mitprotokollierung vermerkt wird welcher Speicherinhalt im Performanzmodus erstellt wurde.

3. Verfahren nach Anspruch 1, **dadurch gekennzeichnet, dass** bei der Mitprotokollierung vermerkt wird welcher Speicherinhalt im Sicherheitsmodus erstellt wurde.

4. Verfahren nach Anspruch 1, **dadurch gekennzeichnet, dass** zur Mitprotokollierung eine Tabelle erstellt wird und die Tabelle abhängig von einem Modussignal welches den Betriebsmodus wenigstens einer Recheneinheit beschreibt ausgewertet wird.

5. Verfahren nach Anspruch 2 und 4, **dadurch gekennzeichnet, dass** bei dem Speicherinhalt Daten von anderem Speicherinhalt, insbesondere Instruktionen, unterschieden werden und zusätzlich in der Tabelle mitprotokolliert wird ob die Daten im Performanzmodus in der Speichereinheit verändert wurden.

6. Verfahren nach Anspruch 3 und 4, **dadurch gekennzeichnet, dass** bei dem Speicherinhalt Daten von anderem Speicherinhalt, insbesondere Instruktionen, unterschieden werden und zusätzlich in der Tabelle mitprotokolliert wird ob die Daten im Sicherheitsmodus in der Speichereinheit verändert wurden.

7. Verfahren nach Anspruch 1 oder 4, **dadurch gekennzeichnet, dass** bei der Mitprotokollierung zusätzlich festgehalten wird ob der jeweilige Speicherinhalt gültig ist.

8. Verfahren nach Anspruch 1 oder 4, **dadurch gekennzeichnet, dass** bei einem Start der Recheneinheiten alle Speicherinhalte ungültig gemacht werden.

9. Verfahren nach Anspruch 1, **dadurch gekennzeichnet, dass** die Mitprotokollierung je Cache-Speicher erfolgt, wobei ein Vergleich der Mitprotokollierung je Cache-Speicher erfolgt.

10. Verfahren nach Anspruch 9, **dadurch gekennzeichnet, dass** für beide Recheneinheiten eine Tabelle im Rahmen der Mitprotokollierung erstellt wird.

11. Verfahren nach Anspruch 9, **dadurch gekennzeichnet, dass** für jede Recheneinheit eine Tabelle im Rahmen der Mitprotokollierung erstellt wird, wobei die Tabelleneinträge zwischen den Tabellen austauschbar sind.

12. Verfahren nach Anspruch 4 oder 9, **dadurch gekennzeichnet, dass** Tabelleneinträge auf Übereinstimmung verglichen werden.

13. Verfahren nach Anspruch 7, **dadurch gekennzeichnet, dass** die Gültigkeitsinformation im Sicherheitsmodus ausgewertet wird.

14. Vorrichtung zur Überwachung eines Systems mit wenigstens zwei Recheneinheiten mit jeweils einem Cache-Speicher, wobei Umschaltmittel enthalten sind durch welche zwischen wenigstens einem Performanzmodus, in dem die beiden Recheneinheiten unterschiedliche Programme respektive Tasks abarbeiten und einem Sicherheitsmodus, in dem die beiden Recheneinheiten redundant das gleiche Programm respektive Task abarbeiten, des Systems umgeschalt werden kann, **dadurch gekennzeichnet daß** die Vorrichtung derart ausgestaltet ist, dass durch die Vorrichtung eine Mitprotokollierung eines Speicherinhalts der jeweiligen Cache-Speicher erfolgt und damit vermerkt welcher Speicherinhalt in welchem Betriebsmodus erstellt wurde.

15. Vorrichtung nach Anspruch 14, **dadurch gekennzeichnet, dass** wenigstens ein Gültigkeitsfeld vorgesehen ist, in welchem eine Gültigkeitsinformation des Speicherinhalts eintragbar ist.

16. Vorrichtung nach Anspruch 14, **dadurch gekennzeichnet, dass** bei der Mitprotokollierung vermerkt wird welcher Speicherinhalt im Performanzmodus erstellt wurde.

17. Vorrichtung nach Anspruch 14, **dadurch gekennzeichnet, dass** bei der Mitprotokollierung vermerkt wird welcher Speicherinhalt im Sicherheitsmodus erstellt wurde.

18. Vorrichtung nach Anspruch 14, **dadurch gekennzeichnet, dass** die Vorrichtung derart ausgestaltet ist, dass zur Mitprotokollierung eine Tabelle erstellt wird und die Tabelle abhängig von einem Modussignal welches den Betriebsmodus wenigstens einer Recheneinheit beschreibt ausgewertet wird.

19. Vorrichtung nach Anspruch 16 und 18, **dadurch gekennzeichnet, dass** bei dem Speicherinhalt Daten von anderem Speicherinhalt, insbesondere Instruktionen, unterschieden werden und die Vorrichtung derart ausgestaltet ist, dass zusätzlich in der Tabelle mitprotokolliert wird ob die Daten im Performanzmodus in der Speichereinheit verändert wurden.

20. Vorrichtung nach Anspruch 16 und 18, **dadurch gekennzeichnet, dass** bei dem Speicherinhalt Daten von anderem Speicherinhalt, insbesondere Instruktionen, unterschieden werden und die Vorrichtung derart ausgestaltet ist, dass zusätzlich in der Tabelle mitprotokolliert wird ob die Daten im Sicherheitsmodus in der Speichereinheit verändert wurden.

21. Vorrichtung nach Anspruch 14 oder 18, **dadurch gekennzeichnet, dass** die Vorrichtung derart ausgestaltet ist, dass bei der Mitprotokollierung zusätzlich festgehalten wird ob der jeweilige Speicherinhalt gültig ist.

22. Vorrichtung nach Anspruch 14 oder 18, **dadurch gekennzeichnet, dass** die Vorrichtung derart ausgestaltet ist, dass bei einem Start der Recheneinheiten alle Speicherinhalte ungültig gemacht werden.

23. Vorrichtung nach Anspruch 14, **dadurch gekennzeichnet, dass** je Recheneinheit eine Cache-Speicher enthalten ist und die Vorrichtung derart ausgestaltet ist, dass die Mitprotokollierung je Cache-Speicher erfolgt, wobei ein Vergleich der Mitprotokollierung je Cache-Speicher erfolgt.

24. Vorrichtung nach Anspruch 23, **dadurch gekennzeichnet, dass** die Vorrichtung derart ausgestaltet ist, dass für beide Recheneinheiten eine Tabelle im Rahmen der Mitprotokollierung enthalten ist.

25. Vorrichtung nach Anspruch 23, **dadurch gekennzeichnet, dass** die Vorrichtung derart ausgestaltet ist, dass für jede Recheneinheit eine Tabelle im Rahmen der Mitprotokollierung erstellt wird, wobei die Tabelleneinträge zwischen den Tabellen austauschbar sind.

26. Vorrichtung nach Anspruch 18 oder 23, **dadurch gekennzeichnet, dass** die Vorrichtung derart ausgestaltet ist, dass Tabelleneinträge auf Übereinstimmung verglichen werden.

27. Vorrichtung nach Anspruch 15, **dadurch gekennzeichnet, dass** die Vorrichtung derart ausgestaltet ist, dass die Gültigkeitsinformation im Sicherheitsmodus ausgewertet wird.

## Claims

1. Method for monitoring a system having at least two computation units each with a cache memory, changeover means being included, which means can be used to change over between at least a performance mode, in which the two computation units execute different programs or tasks, and a safety mode, in which the two computation units redundantly execute the same program or task, of the system, **characterized in that** the memory contents of the respective cache memories are logged, thus making a note of which memory contents were created in which operating mode.

2. Method according to Claim 1, **characterized in that,** during the logging operation, a note is made of which memory contents were created in the performance mode.

3. Method according to Claim 1, **characterized in that**, during the logging operation, a note is made of which memory contents were created in the safety mode.

4. Method according to Claim 1, **characterized in that,** for the purpose of logging, a table is created and the table is evaluated on the basis of a mode signal which describes the operating mode of at least one computation unit.

5. Method according to Claims 2 and 4, **characterized in that**, in the case of the memory contents, data are distinguished from other memory contents, in particular instructions, and it is additionally logged in the table whether the data were changed in the memory unit in the performance mode.

6. Method according to Claims 3 and 4, **characterized in that,** in the case of the memory contents, data are distinguished from other memory contents, in particular instructions, and it is additionally logged in the table whether the data were changed in the memory unit in the safety mode.

7. Method according to Claim 1 or 4, **characterized in that,** during the logging operation, it is additionally recorded whether the respective memory contents are valid.

8. Method according to Claim 1 or 4, **characterized in that** all of the memory contents are rendered invalid when the computation units are started.

9. Method according to Claim 1, **characterized in that** the logging operation is carried out for each cache memory, the logging operation being compared for each cache memory.

10. Method according to Claim 9, **characterized in that** a table is created for both computation units as part of the logging operation.

11. Method according to Claim 9, **characterized in that** a table is created for each computation unit as part of the logging operation, the table entries being able to be interchanged between the tables.

12. Method according to Claim 4 or 9, **characterized in that** table entries are compared for a match.

13. Method according to Claim 7, **characterized in that** the validity information is evaluated in the safety mode.

14. Apparatus for monitoring a system having at least two computation units each with a cache memory, changeover means being included, which means can be used to change over between at least a performance mode, in which the two computation units execute different programs or tasks, and a safety mode, in which the two computation units redundantly execute the same program or task, of the system, **characterized in that** the apparatus is configured in such a manner that the apparatus logs the memory contents of the respective cache memories and thus makes a note of which memory contents were created in which operating mode.

15. Apparatus according to Claim 14, **characterized in that** provision is made of at least one validity field in which validity information of the memory contents can be entered.

16. Apparatus according to Claim 14, **characterized in that,** during the logging operation, a note is made of which memory contents were created in the performance mode.

17. Apparatus according to Claim 14, **characterized in that**, during the logging operation, a note is made of which memory contents were created in the safety mode.

18. Apparatus according to Claim 14, **characterized in that** the apparatus is configured in such a manner that, for the purpose of logging, a table is created and the table is evaluated on the basis of a mode signal which describes the operating mode of at least one computation unit.

19. Apparatus according to Claims 16 and 18, **characterized in that**, in the case of the memory contents, data are distinguished from other memory contents, in particular instructions, and the apparatus is configured in such a manner that it is additionally logged in the table whether the data were changed in the memory unit in the performance mode.

20. Apparatus according to Claims 16 and 18, **characterized in that,** in the case of the memory contents, data are distinguished from other memory contents, in particular instructions, and the apparatus is configured in such a manner that it is additionally logged in the table whether the data were changed in the memory unit in the safety mode.

21. Apparatus according to Claim 14 or 18, **characterized in that** the apparatus is configured in such a manner that, during the logging operation, it is additionally recorded whether the respective memory contents are valid.

22. Apparatus according to Claim 14 or 18, **characterized in that** the apparatus is configured in such a manner that all of the memory contents are rendered invalid when the computation units are started.

23. Apparatus according to Claim 14, **characterized in that** a cache memory is included for each computation unit and the apparatus is configured in such a manner that the logging operation is carried out for each cache memory, the logging operation being compared for each cache memory.

24. Apparatus according to Claim 23, **characterized in that** the apparatus is configured in such a manner that a table is included for both computation units as part of the logging operation.

25. Apparatus according to Claim 23, **characterized in that** the apparatus is configured in such a manner that a table is created for each computation unit as part of the logging operation, the table entries being able to be interchanged between the tables.

26. Apparatus according to Claim 18 or 23, **characterized in that** the apparatus is configured in such a manner that table entries are compared for a match.

27. Apparatus according to Claim 15, **characterized in that** the apparatus is configured in such a manner that the validity information is evaluated in the safety mode.

## Revendications

1. Procédé pour surveiller un système comportant au moins deux unités de calcul ayant chacune une mémoire cache, et des moyens de commutation qui permettent de commuter le système entre au moins un mode de performance dans lequel les deux unités de calcul traitent des programmes ou des tâches différentes et un mode de sécurité dans lequel les deux unités de calcul traitent le même programme ou la même tâche de façon redondante,
**caractérisé en ce qu'**
on fait un protocole combiné d'un contenu de mémoire de la mémoire cache respective en notant le contenu de mémoire et le mode de fonctionnement dans lequel il a été établi.

2. Procédé selon la revendication 1,
**caractérisé en ce qu'**
en faisant le protocole combiné on note le contenu de mémoire qui a été établi en mode performance.

3. Procédé selon la revendication 1,
**caractérisé en ce qu'**
en faisant le protocole combiné on note le contenu de mémoire qui a été établi en mode de sécurité.

4. Procédé selon la revendication 1,
**caractérisé en ce que**
pour le protocole, on fait un tableau que l'on exploite en fonction d'un signal de mode qui décrit le mode de fonctionnement d'au moins une unité de calcul.

5. Procédé selon les revendications 2 et 4,
**caractérisé en ce qu'**
pour le contenu de la mémoire on distingue les données d'un autre contenu de mémoire notamment des instructions et en plus on fait un protocole combiné dans le tableau, indiquant si les données ont été modifiées en mode performance dans l'unité de mémoire.

6. Procédé selon les revendications 3 et 4,
**caractérisé en ce que**
pour le contenu de la mémoire, on distingue les données venant d'un autre contenu de mémoire notamment des instructions et en plus on fait un protocole combiné dans le tableau indiquant si les données ont été modifiées dans l'unité de mémoire en mode de sécurité.

7. Procédé selon les revendications 1 ou 4,
**caractérisé en ce que**
pour le protocole combiné, on retient en outre si le contenu de mémoire respectif est valable.

8. Procédé selon les revendications 1 ou 4,
**caractérisé en ce que**
pour le démarrage des unités de calcul, on invalide tous les contenus de mémoire.

9. Procédé selon la revendication 1,
**caractérisé en ce qu'**
on effectue le protocole combiné chaque fois par mémoire cache et on compare le protocole combiné pour chaque mémoire cache.

10. Procédé selon la revendication 9,
**caractérisé en ce que**
pour les deux unités de calcul, on établit un tableau dans le cadre du protocole combiné.

11. Procédé selon la revendication 9,
**caractérisé en ce que**
pour chaque unité de calcul, on établit un tableau dans le cadre du protocole combiné et les enregistrements dans les tableaux peuvent être échangés entre les tableaux.

12. Procédé selon les revendications 4 ou 9,
**caractérisé en ce qu'**
on compare la concordance des enregistrements dans les tableaux.

13. Procédé selon la revendication 7,
**caractérisé en ce qu'**
on exploite l'information de validité en mode de sécurité.

14. Dispositif de surveillance d'un système comportant au moins deux unités de calcul ayant chacune une mémoire cache, des moyens de commutation étant prévus, permettant de commuter le système entre au moins un mode de performance dans lequel les deux unités de calcul traitent des programmes ou des tâches respectives, différentes et un mode de sécurité dans lequel les unités de calcul traitent de façon redondante le même programme ou la même tâche,
**caractérisé en ce que**
le dispositif est conçu pour assurer un protocole combiné d'un contenu de mémoire de chaque mémoire cache et notant le mode de fonctionnement dans lequel a été établi chaque contenu de mémoire.

15. Dispositif selon la revendication 14,
**caractérisé en ce qu'**
il est prévu au moins un champ de validité dans lequel on enregistre l'information de validité du contenu de mémoire.

16. Dispositif selon la revendication 14,
**caractérisé en ce que**
pour le protocole combiné, on note le contenu de mémoire qui a été établi en mode performance.

17. Dispositif selon la revendication 14,
**caractérisé en ce que**
pour le protocole combiné, on note le contenu de mémoire qui a été établi en mode de sécurité.

18. Dispositif selon la revendication 14,
**caractérisé en ce qu'**
il est conçu pour établir un tableau pour le protocole combiné et le tableau est exploité en fonction du signal de mode qui décrit le mode de fonctionnement d'au moins une unité de calcul.

19. Dispositif selon les revendications 16 et 18,
**caractérisé en ce que**
pour le contenu de mémoire, on distingue les données d'un autre contenu de mémoire notamment les instructions et le dispositif est réalisé pour qu'en plus il assure le protocole combiné dans le tableau indiquant si les données ont été modifiées en mode performance dans l'unité de mémoire.

20. Dispositif selon les revendications 16 et 18,
**caractérisé en ce que**
pour le contenu de mémoire, on distingue les données d'un autre contenu de mémoire notamment les instructions et le dispositif est réalisé pour assurer en plus un protocole combiné dans le tableau indiquant si les données ont été modifiées dans l'unité de mémoire au cours du mode de sécurité.

21. Dispositif selon les revendications 14 ou 18,
**caractérisé en ce qu'**
il est conçu pour enregistrer en outre dans le protocole combiné si le contenu de mémoire respectif est validé.

22. Dispositif selon les revendications 14 ou 18,
**caractérisé en ce qu'**
il est conçu pour invalider tous les contenus de mémoire au démarrage des unités de calcul.

23. Dispositif selon la revendication 14,
**caractérisé par**
une mémoire cache pour chaque unité de calcul et le dispositif est réalisé pour que le protocole combiné se fasse pour chaque mémoire cache et que la comparaison du protocole combiné soit faite pour chaque mémoire cache.

24. Dispositif selon la revendication 23,
**caractérisé en ce que**
le dispositif est réalisé pour que les deux unités de calcul comportent un tableau dans le cadre du protocole combiné.

25. Dispositif selon la revendication 23,
**caractérisé en ce qu'**
il est conçu pour que chaque unité de calcul établisse un tableau dans le cadre du protocole combiné et les inscriptions dans le tableau sont échangées entre les tableaux.

26. Dispositif selon les revendications 18 ou 23,
**caractérisé en ce qu'**
il est conçu pour comparer la concordance des enregistrements dans les tableaux.

27. Dispositif selon la revendication 15,
**caractérisé en ce qu'**
il est conçu pour exploiter l'information de validité en mode de sécurité.
